# EUROPÄISCHE PATENTANMELDUNG

(11) **EP 4 759 666 A1**
(43) Veröffentlichungstag der Anmeldung: **17.06.2026**
(21) Anmeldenummer: 25212005.0
(22) Anmeldetag: 29.10.2025
(51) Int. Cl.: B61D 27/00, B60H 1/22

(54) **SPURGEFÜHRTES FAHRZEUG**

(30) Priorität: 16.12.2024 DE 102024211998
(71) Anmelder: Siemens Mobility GmbH, 80997 München (DE)
(72) Erfinder: Ehrig, Markus, 47829 Krefeld (DE); Kasap, Irfan, 47829 Krefeld (DE)
(74) Vertreter: Siemens Patent Attorneys

(57) **Zusammenfassung**

Spurgeführtes Fahrzeug 1 umfassend zumindest einen Passagierbereich 202, 302 mit zumindest einem Heizungssystem 20, 30, wobei das zumindest eine Heizungssystem 20, 30 zumindest eine Flächenheizung 210, 310 und zumindest eine Strahlungsheizung 220, 320 aufweist, wobei die zumindest eine Flächenheizung 210, 310 und die zumindest eine Strahlungsheizung 220, 320 derart angeordnet sind, dass der zumindest eine Passagierbereich 202, 302 komplementär durch die zumindest eine Flächenheizung 210, 310 und die zumindest eine Strahlungsheizung 220, 320 beheizbar ist.

## Beschreibung

Die Erfindung betrifft ein spurgeführtes Fahrzeug umfassend zumindest einen Passagierbereich mit zumindest einem Heizungssystem, wobei das zumindest eine Heizungssystem zumindest eine Flächenheizung und zumindest eine Strahlungsheizung aufweist, wobei die zumindest eine Flächenheizung und die zumindest eine Strahlungsheizung derart angeordnet sind, dass der zumindest eine Passagierbereich komplementär durch die zumindest eine Flächenheizung und die zumindest eine Strahlungsheizung beheizbar ist.

Ferner betrifft die Erfindung einen digitalen Zwilling eines solchen oder, wie nachfolgend beschrieben, weitergebildeten spurgeführten Fahrzeugs.

In spurgeführten Fahrzeugen, wie Schienenfahrzeugen, werden üblicherweise Klimakanäle verwendet, um den Innenraum mit konditionierter Luft zu versorgen und gleichzeitig Frischluft durch eine Klimaanlage zuzuführen. Der verfügbare Bauraum für diese Klimakanäle ist jedoch begrenzt, was ihre Integration in die Zwischenwände aufwendig und kostspielig macht.

Der aktuelle Stand der Technik bei Klimakanälen in Schienenfahrzeugen zeigt, dass diese aufgrund des begrenzten Bauraums oft aufwendig verlegt werden müssen. Dies führt zu erhöhten Kosten, einer Verkleinerung des inneren Bauraums und möglicherweise zum Wegfall von Sitzplätzen.

Ausgehend davon, liegt der Erfindung die Aufgabe zugrunde, ein spurgeführtes Fahrzeug bereitzustellen, das ein platzsparendes Heizungssystem aufweist.

Diese Aufgabe wird durch das spurgeführte Fahrzeug des Anspruchs 1 gelöst. Weiterhin wird die Aufgabe durch den digitalen Zwilling des Anspruchs 9 gelöst.

Vorteilhafte Ausgestaltungen und Weiterbildungen sind Gegenstand der jeweiligen Unteransprüche.

Erfindungsgemäß wird ein spurgeführtes Fahrzeug bereitgestellt, umfassend zumindest einen Passagierbereich mit zumindest einem Heizungssystem, wobei das zumindest eine Heizungssystem zumindest eine Flächenheizung und zumindest eine Strahlungsheizung aufweist, wobei die zumindest eine Flächenheizung und die zumindest eine Strahlungsheizung derart angeordnet sind, dass der zumindest eine Passagierbereich komplementär durch die zumindest eine Flächenheizung und die zumindest eine Strahlungsheizung beheizbar ist.

Vor diesem Hintergrund bedeutet komplementär beheizbar, dass der zumindest eine Passagierbereich gemeinsam durch Strahlungsheizung und Flächenheizung beheizbar ist.

Vorzugsweise handelt es sich bei der Flächenheizung um eine elektrisch betriebene Flächenheizung.

Bei dem spurgeführten Fahrzeug handelt es sich beispielsweise um ein Schienenfahrzeug oder eine Magnetschwebebahn, vorzugsweise zum Personentransport.

Vorzugsweise handelt es sich bei dem Schienenfahrzeug um einen elektrischen Triebzug.

Erfindungsgemäß wird ferner ein digitaler Zwilling eines solchen oder wie nachfolgend beschrieben, weitergebildeten spurgeführten Fahrzeugs, bereitgestellt, wobei der digitale Zwilling ein digitalisiertes Abbild des spurgeführten Fahrzeugs umfasst.

Durch die erfindungsgemäße Kombination von Flächenheizung und Strahlungsheizung ist es möglich, auf bisherige Heizeinrichtungen zu verzichten, welche zusätzlichen Bauraum beansprucht haben.

Strahlungsheizung nutzen Strahlungswärme, die direkt die Oberflächen von Sitzen, Personen und Wänden erwärmt. Dadurch wird sofort zusätzliche Wärme bereitgestellt.

Die zumindest eine Flächenheizung weist eine größere Trägheit auf und reagiert langsamer als die Strahlungsheizung. Zudem ermöglicht die Installation von zumindest einer Strahlungsheizung eine höhere Heizleistung, da es keine Begrenzung der Oberflächentemperaturen gibt, wie es bei Flächenheizungen der Fall ist.

Durch die erfindungsgemäße Lösung ist eine effiziente Raumnutzung im spurgeführten Fahrzeug gegeben.

Des Weiteren ist die erfindungsgemäße Lösung kosteneffizienter als manche bisherigen Lösungen, da die Installation von Strahlungsheizungen weniger aufwendige bauliche Maßnahmen erfordert und die Betriebskosten des spurgeführten Fahrzeugs durch die effiziente Wärmeabgabe gesenkt werden können.

Das zumindest eine Heizungssystem weist jeweils zumindest eine Flächenheizung und zumindest eine Strahlungsheizung auf.

In Ausgestaltung des spurgeführten Fahrzeugs kann vorgesehen sein, dass der zumindest eine Passagierbereich zumindest eine Heizzone aufweist, die komplementär durch die zumindest eine Flächenheizung und die zumindest eine Strahlungsheizung beheizbar ist.

Hierdurch ist es möglich, dass sich die zumindest eine Flächenheizung und die zumindest eine Strahlungsheizung in Bezug auf ihre Heizleistung mit Blick auf die zumindest eine Heizzone ergänzen. Es sind somit zumindest zwei Wärmequellen in Form zumindest einer Flächenheizung und zumindest einer Strahlungsheizung je Heizzone ausgebildet.

In Ausgestaltung des spurgeführten Fahrzeugs kann vorgesehen sein, dass die zumindest eine Flächenheizung an einem Boden und/oder an der Wand des zumindest einen Passagierbereich und die zumindest eine Strahlungsheizung an einer Decke des zumindest einen Passagierbereichs angeordnet ist.

Die Anordnung der Flächenheizung am Boden und/oder der Wand führt dazu, dass keine Schichtungsprobleme auftreten, wie diese auftreten würden, wenn eine Flächenheizung an der Decke angeordnet werden würde.

Das Vorsehen einer Strahlungsheizung an der Decke ist besonders vorteilhaft, weil hierdurch ein Passagier oder ein Sitzmöbel, auf welchem sich ein Passagier sitzt, unmittelbar durch Strahlungswärme beheizbar ist/sind. Der hierdurch erreichte Heizungseffekt der Strahlungsheizung führt zu einer sofortigen Wärmeabgabe.

Die Anbringung der Infrarotheizer an der Decke spart wertvollen Platz im Innenraum, der sonst für Flächenheizungen benötigt würde. Dies ermöglicht eine effizientere Nutzung des verfügbaren Raums und kann sogar den Wegfall von Sitzplätzen verhindern.

In Ausgestaltung des spurgeführten Fahrzeugs kann vorgesehen sein, dass das spurgeführte Fahrzeug ein Doppelstockfahrzeug ist, mit zumindest einem Oberstock und einem Unterstock, wobei der Oberstock einen ersten Passagierbereich aufweist und der Unterstock einen zweiten Passagierbereich aufweist, wobei der Oberstock ein erstes Heizungssystem aufweist und der Unterstock ein zweites Heizungssystem aufweist.

Hierdurch wird eine konkrete Konfiguration eines Doppelstockfahrzeugs angegeben, in welchem die Platzverhältnisse besonders kritisch sind und der Wegfall eines Klimakanals für die Heizungen des Oberstocks und des Unterstocks besonders große Vorteile hat in Bezug auf die Platzverhältnisse, die sich daraus ergeben.

In Ausgestaltung des spurgeführten Fahrzeugs kann vorgesehen sein, dass der Oberstock zumindest eine erste Heizzone aufweist und der Unterstock zumindest eine zweite Heizzone aufweist, welche jeweils individuell temperierbar ist.

Durch das Bereitstellen zumindest einer ersten Heizzone im Oberstock und zumindest einer zweiten Heizzone im Unterstock wird erreicht, dass Oberstock und Unterstock unterschiedlich temperierbar sind. Ferner können die Heizleistungen entsprechend an die Anzahl der Personen individuell angepasst werden oder die Solltemperatur der ersten Heizzone und/oder der zweiten Heizzone entsprechend angepasst werden.

In Ausgestaltung des spurgeführten Fahrzeugs kann vorgesehen sein, dass die zumindest eine Flächenheizung eine maximale Oberflächentemperatur von 35°C aufweist und die zumindest eine Strahlungsheizung eine maximale Oberflächentemperatur von mehr als 35 °C, vorzugsweise mehr als 50°C, insbesondere mehr als 65°C, aufweist.

Hierdurch wird erreicht, dass einerseits die zulässige Oberflächentemperatur der Flächenheizung nicht überschritten wird und andererseits die nötige Wärmemenge durch die Strahlungsheizung in Kombination mit der Flächenheizung bereitgestellt wird, da die Strahlungsheizung eine entsprechend höhere Oberflächentemperatur aufweist.

In Ausgestaltung des spurgeführten Fahrzeugs kann vorgesehen sein, dass die zumindest eine Strahlungsheizung eine Infrarotheizung ist.

In Ausgestaltung des spurgeführten Fahrzeugs kann vorgesehen sein, dass die zumindest eine Strahlungsheizung für einen Fahrgast unzugänglich angeordnet ist.

Hierdurch wird erreicht, dass ein versehentliches Verbrennen eines Fahrgastes an der Strahlungsheizung unterbunden wird.

Nachfolgend soll die Erfindung anhand eines Ausführungsbeispiels mit Bezug auf die Zeichnung erläutert werden.

Es zeigt:

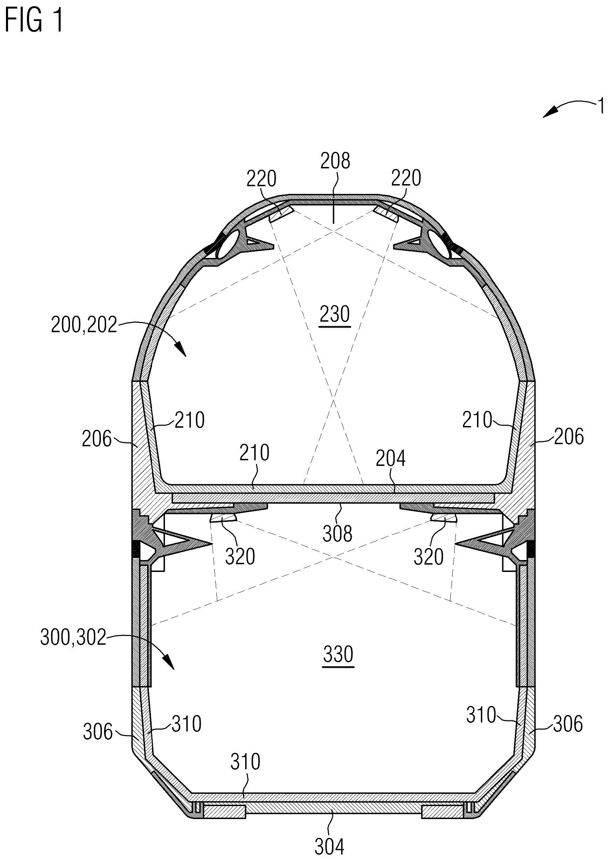

- Fig. 1: eine schematische Schnittdarstellung eines erfindungsgemäßen spurgeführten Fahrzeugs.

Fig. 1 zeigt eine schematische Schnittdarstellung des erfindungsgemäßen spurgeführten Fahrzeugs 1.

Das spurgeführte Fahrzeug 1 umfasst zumindest einen Passagierbereich 202, 302 mit zumindest einem Heizungssystem 20, 30.

Das zumindest eine Heizungssystem 20, 30 weist zumindest eine Flächenheizung 210, 310 und zumindest eine Strahlungsheizung 220, 320 auf.

Das zumindest eine Heizungssystem 20, 30 weist in Ausgestaltung der Fig. 1 jeweils zumindest eine Flächenheizung 210, 310 und zumindest eine Strahlungsheizung 220, 320 auf.

Die zumindest eine Flächenheizung 210, 310 und die zumindest eine Strahlungsheizung 220, 320 sind derart angeordnet, dass der zumindest eine Passagierbereich 202, 302 komplementär durch die zumindest eine Flächenheizung 210, 310 und die zumindest eine Strahlungsheizung 220, 320 beheizbar ist.

Der zumindest eine Passagierbereich 202, 302 weist zumindest eine Heizzone 230, 330 auf, die komplementär durch die zumindest eine Flächenheizung 210, 310 und die zumindest eine Strahlungsheizung 220, 320 beheizbar ist.

Die zumindest eine Flächenheizung 210, 310 ist an einem Boden 204, 304 und/oder an der Wand 206, 306 des zumindest einen Passagierbereichs 202, 204 angeordnet.

Die zumindest eine Strahlungsheizung 220, 320 ist an einer Decke 208, 308 des zumindest einen Passagierbereichs 202, 302 angeordnet.

Wie aus der Fig. 1 ersichtlich ist, ist das spurgeführte Fahrzeug 100 ein Doppelstockfahrzeug, mit zumindest einem Oberstock 200 und einem Unterstock 300.

Der Oberstock 200 weist einen ersten Passagierbereich 202 auf und der Unterstock 300 weist einen zweiten Passagierbereich 302 auf. Ferner weist der Unterstock 300 zumindest einen Eingangsbereich auf (nicht gezeigt in Fig. 1).

Der Oberstock 200 weist ein erstes Heizungssystem 20 auf und der Unterstock 300 weist ein zweites Heizungssystem 30 auf.

In Besonders vorteilhafter Ausgestaltung weist der Unterstock 300 in zumindest einem Passagierbereich 302 und in zumindest einem Eingangsbereich zumindest ein zweites Heizungssystem 30 auf.

Der Oberstock 200 weist zumindest eine erste Heizzone 230 auf und der Unterstock 300 weist zumindest eine zweite Heizzone 330 auf, welche jeweils individuell temperierbar ist.

Die zumindest eine Flächenheizung 210, 310 weist eine maximale Oberflächentemperatur T₁ von 35°C auf.

Die zumindest eine Strahlungsheizung 220, 320 weist eine maximale Oberflächentemperatur von mehr als 35 °C, vorzugsweise mehr als 50°C, insbesondere mehr als 65°C, auf.

Die zumindest eine Strahlungsheizung 220, 320 ist in Ausgestaltung eine Infrarotheizung.

Die zumindest eine Strahlungsheizung 220, 320 ist für einen Fahrgast unzugänglich angeordnet. Gemäß den Figuren ist diese bspw. derart in der Decke verbaut, dass diese für einen Fahrgast nicht erreichbar ist und dieser die Strahlungsheizung nicht ungewollt berühren kann.

Schließlich wird ein digitaler Zwilling des spurgeführten Fahrzeugs 1 bereitgestellt, wobei der digitale Zwilling ein digitalisiertes Abbild des spurgeführten Fahrzeugs 1 umfasst. Der digitale Zwilling ist dabei derart ausgebildet, dass dieser es ermöglicht die Funktionalität des zumindest einen Heizungssystems 20, 30 des spurgeführten Fahrzeugs 1 abzubilden und die Wirkung des zumindest einen Heizungssystems 20, 30 auf den zumindest einen Passagierbereich 202, 302 zu simulieren.

Sämtliche Ausgestaltungen des spurgeführten Fahrzeugs 1 gelten in gleicher Weise für den digitalen Zwilling.

Heizungssysteme 20, 30 von spurgeführten Fahrzeugen 1 sind hinsichtlich ihrer Dimensionierung und Auslegung nicht vergleichbar mit den Heizungssysteme 20, 30 von nicht spurgeführten Fahrzeugen wie bspw. PKWs oder LKWs.

Abschließend sei erwähnt, dass die Merkmale aller oben beschriebenen Ausführungsvarianten untereinander in beliebiger Weise kombiniert werden können, um weitere andere Ausführungsbeispiele der Erfindung zu bilden. Auch können alle Merkmale von Unteransprüchen jeweils für sich mit jedem Merkmal jedes anderen der Ansprüche kombiniert werden, und zwar jeweils für sich allein oder in beliebiger Kombination, um weitere andere Ausführungsbeispiele zu erhalten.

Obwohl die Erfindung im Detail durch ein Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Spurgeführtes Fahrzeug (1) umfassend zumindest einen Passagierbereich (202, 302) mit zumindest einem Heizungssystem (20, 30), wobei das zumindest eine Heizungssystem (20, 30) zumindest eine Flächenheizung (210, 310) und zumindest eine Strahlungsheizung (220, 320) aufweist, wobei die zumindest eine Flächenheizung (210, 310) und die zumindest eine Strahlungsheizung (220, 320) derart angeordnet sind, dass der zumindest eine Passagierbereich (202, 302) komplementär durch die zumindest eine Flächenheizung (210, 310) und die zumindest eine Strahlungsheizung (220, 320) beheizbar ist.

2. Spurgeführtes Fahrzeug nach Anspruch 1,
**dadurch gekennzeichnet, dass**
der zumindest eine Passagierbereich (202, 302) zumindest eine Heizzone (230, 330) aufweist, die komplementär durch die zumindest eine Flächenheizung (210, 310) und die zumindest eine Strahlungsheizung (220, 320) beheizbar ist.

3. Spurgeführtes (100) nach Anspruch 1 oder 2,
**dadurch gekennzeichnet, dass**
die zumindest eine Flächenheizung (210, 310) an einem Boden (204, 304) und/oder an der Wand (206, 306) des zumindest einen Passagierbereich (202, 302) und die zumindest eine Strahlungsheizung (220, 320) an einer Decke (208, 308) des zumindest einen Passagierbereichs (202, 302) angeordnet ist.

4. Spurgeführtes Fahrzeug (100) nach einem der vorhergehenden Ansprüche,
**dadurch gekennzeichnet, dass**
das spurgeführte Fahrzeug (100) ein Doppelstockfahrzeug ist, mit zumindest einem Oberstock (200) und einem Unterstock (300), wobei der Oberstock (200) einen ersten Passagierbereich (202) aufweist und der Unterstock (300) einen zweiten Passagierbereich (302) aufweist, wobei der Oberstock (200) ein erstes Heizungssystem (20) aufweist und der Unterstock (300) ein zweites Heizungssystem (30) aufweist.

5. Spurgeführtes Fahrzeug (1) nach Anspruch 4,
**dadurch gekennzeichnet, dass**
der Oberstock (200) zumindest eine erste Heizzone (230) aufweist und der Unterstock (300) zumindest eine zweite Heizzone (330) aufweist, welche jeweils individuell temperierbar ist.

6. Spurgeführtes Fahrzeug (1) nach einem der vorhergehenden Ansprüche,
**dadurch gekennzeichnet, dass**
die zumindest eine Flächenheizung (210, 310) eine maximale Oberflächentemperatur (T₁) von 35°C aufweist und die zumindest eine Strahlungsheizung (220, 320) eine maximale Oberflächentemperatur von mehr als 35 °C, vorzugsweise mehr als 50°C, insbesondere mehr als 65°C, aufweist.

7. Spurgeführtes Fahrzeug nach einem der vorhergehenden Ansprüche,
**dadurch gekennzeichnet, dass**
die zumindest eine Strahlungsheizung (220, 320) eine Infrarotheizung ist.

8. Spurgeführtes Fahrzeug (1) nach einem der vorhergehenden Ansprüche,
**dadurch gekennzeichnet, dass**
die zumindest eine Strahlungsheizung (220, 320) für einen Fahrgast unzugänglich angeordnet ist.

9. Digitaler Zwilling eines spurgeführten Fahrzeugs (1) nach einem der Ansprüche 1 bis 8, wobei der digitale Zwilling ein digitalisiertes Abbild des spurgeführten Fahrzeugs (1) umfasst.
